# EUROPÄISCHE PATENTSCHRIFT

(11) **EP 0 786 848 B1**
(45) Veröffentlichungstag und Bekanntmachung des Hinweises auf die Patenterteilung: **27.02.2002**
(21) Anmeldenummer: 96118542.8
(22) Anmeldetag: 19.11.1996
(51) Int. Cl.: H02H 7/085

(54) **Elektronische Überwachung der Antriebskraft eines Antriebs**
Electronic monitoring of the driving force of a drive
Surveillance électronique de la force motrice d'un entrainement

(30) Priorität: 25.01.1996 DE 19602633
(43) Veröffentlichungstag der Anmeldung: 30.07.1997
(73) Patentinhaber: MARANTEC ANTRIEBS- UND STEUERUNGSTECHNIK GMBH & CO. PRODUKTIONS KG, D-33428 Marienfeld (DE)
(72) Erfinder: Hörmann, Michael, 33790 Halle/Westf. (DE)
(74) Vertreter: Laufhütte, Dieter, Dr.-Ing.

(56) Entgegenhaltungen:
- DE-A- 3 501 579
- DE-A- 4 214 998
- PATENT ABSTRACTS OF JAPAN vol. 096, no. 005, 31.Mai 1996 & JP 08 012188 A (FUJIKURA LTD), 16.Januar 1996,

## Beschreibung

Die Erfindung betrifft eine elektronische Schaltung und ein Verfahren mit einer derartigen Schaltung zur Überwachung der Antriebskraft eines Antriebs, vorzugsweise eines elektromotorischen Antriebs.

Zur Überwachung der Antriebsbelastung eines Antriebs werden in der Antriebstechnik elektronische Schaltungen eingesetzt, die ein Fehlersignal erzeugen, sobald der Betriebszustand des Antriebes von einem vorgegebenen Maß abweicht. Handelt es sich zum Beispiel um automatisch angetriebene Türen oder Tore, so dient eine derartige Überwachungsschaltung vor allem dazu, einer Verletzung von Personen vorzubeugen, wenn diese unvorhergesehen beim Schließen der Tür oder des Tores in den Schließbereich eintreten. Außerdem kann generell mit einer derartigen Überwachungsschaltung der Antrieb vor Überlastung und damit vor Zerstörung geschützt werden.

Die üblicherweise eingesetzten Überwachungsschaltungen basieren darauf, daß ein die Antriebsbelastung charakterisierender Meßwert und ein vorgegebener Sollwert einer Vergleichseinrichtung sobald der Meßwert den Sollwert überschreitet, wobei der Sollwert in diesem Fall dann die maximal zulässige Antriebsbelastung darstellt. Wird die Überwachungsschaltung im Rahmen einer Mikroprozessorsteuerung realisiert, so liegt der Sollwert im allgemeinen in digitaler Form, zum Beispiel als in einem Speicher abgelegter Wert, vor. Die Erfassung des Meßwertes erfolgt üblicherweise durch einen Analog/Digital-Wandler, um so die Meßwerte in der Mikroprozessorsteuerung auswerten zu können. Eine derartige Anordnung hat allerdings den Nachteil, daß durch die Verwendung eines Analog/Digital-Wandlers hohe Bauteilkosten entstehen. Zudem setzt ein Analog/Digital-Wandler zur Meßwerterfassung eine aufwendige Filterbeschaltung voraus, um Aliasing-Effekte zu verhindern.

Aus der deutschen Patentanmeldung DE-A-35 01 579, "Verfahren und Vorrichtung zur Schnittkraftüberwachung einer Werkzeugmaschine", ist es bekannt, ein der Schnittkraft des Werkzeugs entsprechendes Meßsignal mit einem vorgegebenen Schnittkraft-Grenzwertsignal zu vergleichen. Dabei wird die Schnittkraft des Werkzeugs durch Messung der Stromaufnahme eines die Zustellung des Werkzeugs bewirkenden Servomotors bestimmt. Der vorgegebene Schnittkraft-Grenzwert, der den Sollwert der Regelschaltung darstellt, liegt dabei in digitaler Form vor. Um nun diesen digitalen Soll-Werten mit dem als Analogsignal vorliegenden Ist-Wert der Schnittkraft zu vergleichen, wird das Schnittkraft-Grenzwertsignal einem Digital-Analog-Wandler zugeführt, um auch den Soll-Wert in analoger Form zu erhalten. Ist- und Soll-Wert werden mittels einer analogen Komparatorschaltung verglichen, und falls die Stromaufnahme des Servomotors den vorgegebenen Grenzwert überschreitet, wird ein Fehlersignal generiert.

In dem japanischen Patent Abstract Vo. 096, No. 005, 31. Mai 1996 + JP 08012188 A, 16. Januar 1996 wird ein Verfahren vorgestellt, durch welches in einem aus mehreren festen und losen Rollen bestehenden Seilzug der Riß des Zugseils detektiert werden kann. Dazu wird mittels eines Zugkraftaufnehmers der Ist-Wert der Zugkraft erfaßt und mit einem digital gespeicherten Soll-Wert verglichen. Um den Vergleich durchführen zu können, wird der digital gespeicherte Soll-Wert durch einen Digital-Analog-Wandler in einen analogen Soll-Wert umgewandelt. Der Ist-Wert des Kraftaufnehmers und der Analogausgang des Digital-Analog-Wandlers werden einem analogen Komparator zugeführt. Für den Fall, daß der Ist-Wert der Zugkraft, unter der das Zugseil steht, den Sollwert unterschreitet, kann von einem Riß des Zugseils ausgegangen werden. Die Komparatorschaltung erzeugt dann sofort ein Stoppsignal.

Aufgabe der Erfindung ist es daher, bei einer elektronischen Schaltung der eingangs angegebenen Art einfache schaltungstechnische Maßnahmen zur Kostenreduzierung vorzusehen.

Diese Aufgabe wird erfindungsgemäß durch eine elektronische Schaltung mit den im Patentanspruch 1 aufgeführten Merkmalen gelöst. Ihrem grundsätzlichen Aufbau nach besteht die erfindungsgemäße elektronische Schaltung aus einem Kraftaufnehmer, dessen Ausgangssignal ein analoges Meßsignal der Antriebskraft ist, einem Sollwertgeber, der einen digitalen Speicher zur Speicherung mindestens eines digitalen Sollwerts aufweist, wobei die gespeicherten Sollwerte einem Digital/Analog-Wandler derart zuführbar sind, daß ein analoges Referenzsignal generierbar ist, und aus einer Überwachungs-Vergleichseinrichtung, der als analoge Eingänge das Referenzsignal und das Meßsignal zuführbar sind. Die erfindungsgemäße Lösung besteht somit darin, daß der Vergleich zwischen dem Meßsignal und dem Sollwert nicht als Rechenoperation in der Mikroprozessorsteuerung, sondern durch eine analoge Vergleichseinrichtung realisiert ist. Hierzu wird der als digitaler Wert vorliegende Sollwert einem Digital/Analog-Wandler zugeführt, um das derart gewandelte analoge Referenzsignal mit dem analogen Meßsignal vergleichen zu können, wobei durch die Überwachungs-Vergleichseinrichtung ein Fehlersignal generierbar ist, sobald das Meßsignal von dem Referenzsignal in vorgegebener Weise abweicht.

Die Erfindung hat den Vorteil, daß ein teurer Analog/Digital-Wandler mit aufwendiger Filterbeschaltung eingespart werden kann, wodurch die Kosten einer gattungsgemäßen elektronischen Schaltung erheblich reduziert werden können. Demgegenüber muß zwar zur Wandlung des digitalen Sollwerts ein Digital/Analog-Wandler eingesetzt werden, allerdings ist bei der vorliegenden Anwendung eine Digital/Analog-Wandlung generell kostengünstiger als eine Analog/Digital-Wandlung durchzuführen. Die Erfindung überwindet somit ein in der Fachwelt vorherrschendes Vorurteil, daß eine Meßwertverarbeitung mit einer Mikroprozessorsteuerung generell eine Analog/Digital-Wandlung des Meßwerts voraussetzt. Bei der erfindungsgemäßen Schaltung werden demgegenüber kostenaufwendige Schaltungsteile durch kostengünstigere, analoge Schaltungsteile ersetzt, ohne dabei auf die eigentlichen Vorteile einer Mikroprozessorsteuerung, nämlich Flexibilität durch die Austauschbarkeit von Software, verzichten zu müssen.

Nach einer bevorzugten Ausführungsform der Erfindung kann durch mehrere digital gespeicherte Sollwerte nach einer Digital/Analog-Wandlung ein Referenzsignal in Abhängigkeit von der Zeit gebildet werden. Dies ist insbesondere dann vorteilhaft, wenn es sich bei der Antriebsbewegung um einen immer wiederkehrenden Verlauf handelt und die Antriebsbelastung somit im voraus bekannt ist. In diesem Fall ist es auch denkbar, daß vor der Inbetriebnahme des Antriebs der jeweilige Verlauf der Antriebsbelastung des Antriebs einmalig durch einen Analog/Digital-Wandler aus dem Meßsignal gewonnen wird, wobei der dabei benötigte Analog/Digital-Wandler für mehrere Überwachungsschaltungen verwendet werden kann, ohne daß dieser in jeder Schaltung eingebaut werden muß. Während des Betriebes wird bei jedem Start des Antriebes auch der Sollwertgeber aktiviert, so daß die gespeicherten Abtastwerte über einen Digital/Analog-Wandler ausgegeben und als analoges Referenzsignal mit dem tatsächlichen Kraftverlauf verglichen werden können. Durch ein derartiges zeitabhängiges Referenzsignal kann die Ansprechschwelle immer auf einen konstanten Wert eingestellt werden. Selbstverständlich ist es aber als Spezialfall auch möglich, daß nur ein digitaler Sollwert und damit eine konstante Referenzspannung erzeugt wird. Dieses entspricht dem Fall, daß eine konstante Spannung als Referenzspannung direkt vorgegeben wird.

Nach einer weiteren bevorzugten Ausführungsform der Erfindung besteht die Überwachungs-Vergleichseinrichtung vorzugsweise aus einem Operationsverstärker, der als Komparator geschaltet ist. Derartige Operationsverstärker sind in vielfältiger Form und kostengünstig erhältlich. Zweckmäßigerweise wird durch den Operationsverstärker ein Fehlersignal generiert, sobald das Meßsignal eine größere Spannung als das Referenzsignal aufweist. Selbstverständlich sind bei der Verwendung von mehreren Operationsverstärkern aber auch kompliziertere Verknüpfungslogiken denkbar.

Wird als Antrieb ein Gleichstrommotor verwendet, so läßt sich der Kraftaufnehmer besonders vorteilhaft dadurch realisieren, daß eine Strommessung des Antriebsstroms über einen Meßwiderstand (Shunt) mit nachfolgendem Meßverstärker erfolgt. Selbstverständlich sind aber auch andere Meßprinzipien denkbar, die andere die Antriebsbelastung charakterisierende Meßgrößen erfassen.

Nach einer weiteren bevorzugten Ausführungsform ist der Sollwertgeber in einer digitalen Steuereinheit integriert, die ebenfalls die Logik zur Steuerung des Antriebes beinhaltet. Um eine kostengünstige Digital/Analog-Wandlung der gespeicherten digitalen Sollwerte zu realisieren, wird vorzugsweise ein Impulsbreitenmodulator eingesetzt, dessen Taktverhältnis und dessen gemittelte Ausgangsspannung proportional zu den zugeführten digitalen Soll-werten sind.

Eine erfinderische Weiterbildung der erfindungsgemäßen elektronischen Schaltung besteht in einem elektronischen Sollwertgeber mit den im Patentanspruch 9 aufgeführten Merkmalen. Die erfindungsgemäße Lösung besteht darin, daß die Sollwerte nicht mehr einmalig vor Inbetriebnahme des Antriebs in den Sollwertgeber eingelesen werden, sondern daß der Sollwert automatisch dem tatsächlichen Meßwert mittels einer Regeleinrichtung mitgeführt wird. Dabei ist die Regeleinrichtung derart ausgelegt, daß bei normalen Betriebsbedingungen des Antriebs der Betrag der Regeldifferenz zwischen Meßsignal und Regelsignal kleiner als ein vorgegebener Schwellenwert ist. Dies bedeutet, daß die Regeleinrichtung derart optimiert ist, daß sie zum einen den zu erwartenden Änderungen des Meßsignals folgen kann, aber zum anderen auch träge genug ist, um unerwartet schnelle Änderungen nicht zu berücksichtigen.

Die erfinderische Weiterbildung hat den Vorteil, daß sich die Überwachungsschaltung automatisch an langfristige Änderungen des Betriebsverhaltens des Antriebs anpassen kann. So könnte sich zum Beispiel die Antriebskraft im Laufe der Zeit durch Korrosion oder Abrieb in zulässiger Weise erhöhen, was aber bei fest vorgegebenen Sollverläufen zur Generierung eines Fehlersignals und damit zum Abschalten des Antriebs führen könnte. Demgegenüber ist es durch die erfinderische Weiterbildung der elektronischen Schaltung mit einem elektronischen Sollwertgeber möglich, daß sich der Sollwert automatisch an zulässige Änderungen des Istverhaltens des Antriebs anpaßt.

Nach einer bevorzugten Ausführungsform ist die Regeleinrichtung in einer digitalen Steuereinheit integriert, wobei das analoge Regeldifferenzsignal als digitaler Wert über einen Analog/Digital-Wandler der Regeleinrichtung zuführbar ist und wobei ein von der Regeleinrichtung momentan ermittelter Regelungsoffset der Regelungs-Vergleichseinrichtung über einen Digital/Analog-Wandler als analoges Regelsignal zuführbar ist. Vorzugsweise ist auch der Schwellenwertaddierer in der digitalen Steuereinheit integriert, so daß der Schwellenwert als digitaler Wert in einem digitalen Speicher abspeicherbar ist. Im Gegensatz zu dem bei der Meßsignalaufnahme zu verwendenden Analog/Digital-Wandler kann zur Wandlung des analogen Regeldifferenzsignals ein sehr kostengünstiger Analog/Digital-Wandler verwendet werden, da die Regeleinrichtung auch mit einer geringen Auflösung des Regeldifferenzsignals betreibbar ist. Eine Integration der Regeleinrichtung und des Schwellenwertaddierers in die digitale Steuereinheit hat deshalb insgesamt den Vorteil, daß eine weitere Kostenreduktion möglich ist.

Nach einer weiteren bevorzugten Ausführungsform ist statt des analogen Regelsignals das analoge Referenzsignal als Eingang der Regelungs-Vergleichseinrichtung über einen Verstärker zuführbar, wobei der Verstärkungsfaktor des Verstärkers von dem Wert des digitalen Regelungsoffsets abhängig ist. Dies hat den Vorteil, daß hierdurch ein weiterer Digital/Analog-Wandler eingespart werden kann. Wird allerdings das Referenzsignal als Eingang für die Regelungs-Vergleichseinrichtung statt des Regelungsoffsets herangezogen, so muß berücksichtigt werden, daß der Wert des Referenzsignals um einen bestimmten Schwellenwert höher als der des Regelungsoffsets ist. Deshalb ist ein Verstärker mit einem von dem Regelungsoffset abhängigen Verstärkungsfaktor vorgesehen, der das Referenzsignal wieder entsprechend abschwächt.

Weitere erfindungsgemäße Lösungen bestehen aus einem Verfahren zur elektronischen Überwachung der Antriebskraft mit den im Anspruch 13 aufgeführten Merkmalen und aus einem Verfahren zur elektronischen Ermittlung von digitalen Sollwerten mit den im Anspruch 14 aufgeführten Merkmalen.

Die erfindungsgemäße elektronische Schaltung sowie der erfindungsgemäße elektronische Sollwertgeber werden vorzugsweise für Verschließelemente, wie zum Beispiel Tore, Türen, Rolläden oder Fenster, verwendet.

Weitere Einzelheiten und Vorteile der Erfindung werden anhand der in der Zeichnung dargestellten Ausführungsbeispiele näher erläutert. In dieser zeigt:
- Fig. 1: ein Prinzipschaltbild der erfindungsgemäßen elektronischen Überwachungsschaltung,
- Fig. 2: ein Prinzipschaltbild einer elektronischen Überwachungsschaltung nach dem Stand der Technik,
- Fig. 3: ein erstes Ausführungsbeispiel der erfindungsgemäßen elektronischen Überwachungsschaltung mit dem erfindungsgemäßen elektronischen Sollwertgeber und
- Fig. 4: ein zweites Ausführungsbeispiel der erfindungsgemäßen elektronischen Überwachungsschaltung mit dem erfindungsgemäßen elektronischen Sollwertgeber.

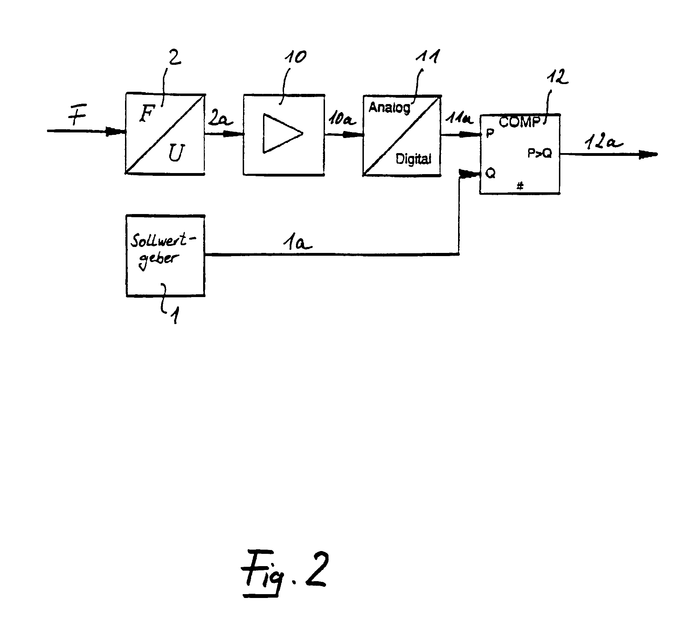

Fig. 2 zeigt eine Überwachungsschaltung nach dem Stand der Technik. Diese besteht aus einem Kraftaufnehmer (2), dessen analoges Ausgangssignal (2a) ein analoges Meßsignal der Antriebskraft bzw. der Antriebsbelastung des Antriebs ist. Das analoge Meßsignal (2a) wird einem Verstärker (10) zugeführt, der eine entsprechende Filterbeschaltung aufweist, um hochfrequente Störungen in dem Meßsignal (2a) zu unterdrücken. Das gefilterte Meßsignal (10a) wird einem Analog/Digital-Wandler (11) zugeführt und in digitaler Form durch eine digitale Steuereinheit eingelesen. Die digitale Steuereinheit umfaßt einen Sollwertgeber (1) und eine Vergleichseinrichtung (12), wobei die Vergleichseinrichtung (12) in Form eines Rechenbefehls realisiert ist. Der digitale Meßwert (11a) sowie der Sollwert (1a) werden der Vergleichseinrichtung (12) zugeführt. Sobald der Meßwert den Sollert in unzulässiger Weise überschreitet, wird durch die Vergleichseinrichtung (12) das Fehlersignal (12a) generiert.

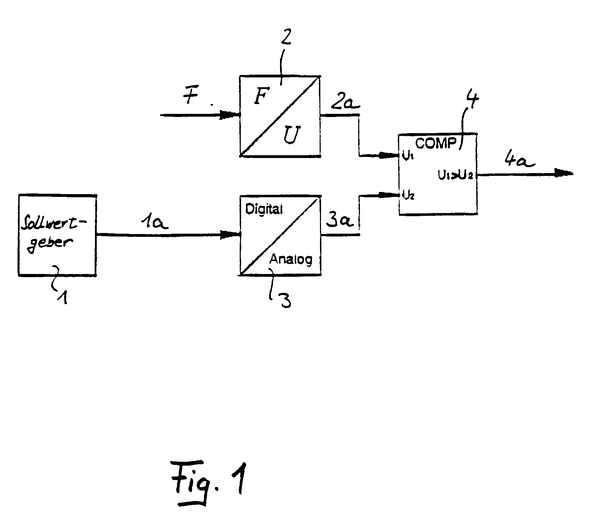

Demgegenüber zeigt Fig. 1 ein Prinzipschaltbild der erfindungsgemäßen Überwachungsschaltung. Die Überwachungs-Vergleichseinrichtung ist in diesem Fall aus der digitalen Steuereinheit ausgelagert und besteht aus dem Komparator (4). Die in dem Sollwertgeber (1) gespeicherten Sollwerte (1a) werden über einen Digital/Analog-Wandler (3) in ein analoges Referenzsignal (3a) gewandelt. Dieses wird zusammen mit dem analogen Meßsignal (2a) dem Komparator zugeführt, der die beiden anliegenden Spannungen U1 und U2 miteinander vergleicht und ein Fehlersignal (4a) generiert, sobald das Meßsignal (2a) größer als das Meßsignal (3a) ist.

Werden Gleichstromantriebe verwendet, so basiert der Kraftaufnehmer auf einer Strommessung des Antriebsstroms. Dies folgt aus der Erkenntnis, daß der Antriebsstrom bei Gleichstromantrieben ein Maß für das abgegebene Moment bzw. für die Antriebskraft ist. Die Strommessung erfolgt über einen Meßwiderstand (Shunt), wobei die daran anliegende Spannung einem Meßverstärker zugeführt wird. Der Digital/Analog-Wandler besteht vorzugsweise aus einem Impulsbreitenmodulator, der einen digitalen Eingangswert in eine Impulsfolge wandelt, deren Taktverhältnis proportional zum anliegenden Wert ist. Um eine analoge Spannung zu erhalten, wird die Impulsfolge auf einfache Weise zum Beispiel durch einen Kondensator, geglättet.

Bei der Funktionsweise der erfindungsgemäßen elektronischen Schaltung ist zwischen einem Initialisierungsbetrieb, einem Testbetrieb und einem Normalbetrieb zu unterscheiden. Der Initialisierungsbetrieb dient dazu, geeignete Sollwerte für den Sollwertgeber (1) zu ermitteln und diese entsprechend abzuspeichern. Die Ermittlung der Sollwerte geschieht dabei in Berücksichtigung der speziellen Gegebenheiten, unter denen der jeweilige Antrieb eingesetzt wird. Der Testbetrieb dient dazu, daß die Überwachungsschaltung einem Selbsttest unterworfen werden kann. Ein derartiger Selbsttest ist insbesondere dann erforderlich, wenn die erfindungsgemäße Überwachungsschaltung dazu verwendet werden soll, um einer Verletzung von Personen vorzubeugen. In diesem Fall kann vor Beginn des Normalbetriebes durch einen Selbsttest festgestellt werden, ob eine einwandfreie Funktionsfähigkeit der Überwachungsschaltung vorliegt.

Zur Durchführung eines Selbsttests im Testbetrieb gibt der Sollwertgeber den Sollwert (1a) derart niedrig vor, daß dieser durch den Antrieb im Anlauf kurzzeitig überschritten wird. Wird in diesem Fall ein Fehlersignal (4a) erzeugt, so ist die Funktion der Überwachungsschaltung gewährleistet und der Sollwertgeber stellt die entsprechenden Sollwerte für den Normalbetrieb ein.

Der Normalbetrieb ist wiederum dahingehend zu unterscheiden, ob nur ein konstanter Sollwert oder eine zeitlich veränderbare Abtastfolge vom Sollwertgeber vorgegeben wird. Im ersten Fall liegt über den gesamten Normalbetrieb hinweg an der Überwachungs-Vergleichseinrichtung (4) eine konstante Referenzspannung (3a) an. Der zweite Fall ist insbesondere dann in Betracht zu ziehen, wenn eine immer wiederkehrende Bewegung durch den Antrieb ausgeführt wird. Bei Starten des Antriebs erhält der Sollwertgeber ein Triggersignal, woraufhin der von der Zeit zu erwartende Belastungsverlauf (3a) ständig mit dem Meßsignal (2a) der aktuellen Antriebskraft verglichen wird. In beiden Fällen wird ein Fehlersignal (4a) generiert, sobald die Spannung des Meßsignals (2a) die Spannung des Referenzsignals (3a) überschreitet.

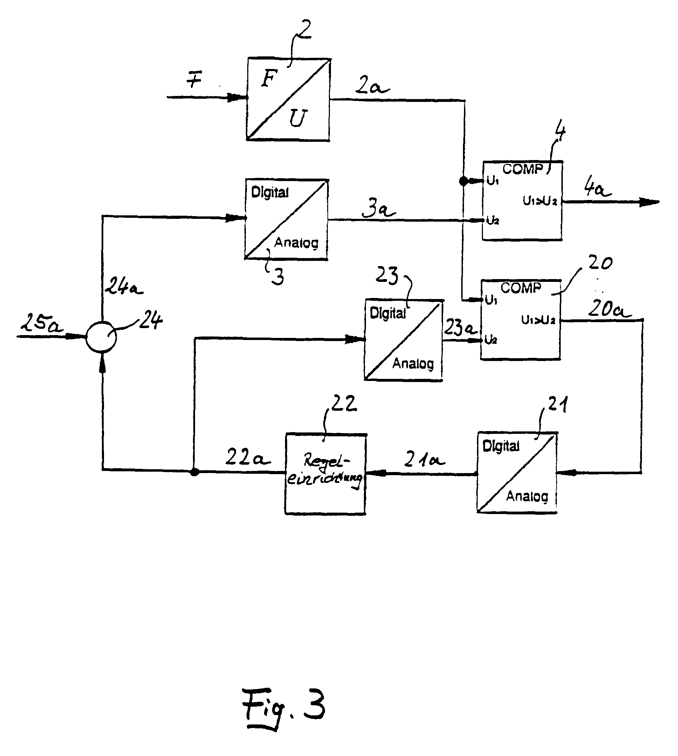

Fig. 3 zeigt ein Prinzipschaltbild einer erfinderischen Weiterbildung der erfindungsgemäßen Überwachungsschaltung nach Fig. 1. Der Sollwertgeber (1) ist in diesem Fall durch eine automatische Nachführung des Sollwerts ersetzt worden. Das Grundprinzip der Schaltungserweiterung besteht darin, daß das Referenzsignal (3a) durch eine Regeleinrichtung (22) ständig dem Meßsignal (2a) nachgeführt wird. Die Nachführung durch die Regeleinrichtung (22) ist dabei so träge eingestellt, daß unerwartete, schnelle Änderungen in dem Verlauf des Meßsignals (2a) durch die Regeleinrichtung (22) unberücksichtigt bleiben, so daß in diesen Fällen wiederum das Meßsignal das Referenzsignal überschreitet und ein Fehlersignal generiert wird.

Der erweiterte Schaltungsteil besteht demnach aus einer Regelungs-Vergleichseinrichtung (20), die eine Abweichung eines internen Regelungsoffsets (22a) zu dem analogen Meßsignal (2a) feststellt. Zweckmäßigerweise ist die Regeleinrichtung in der digitalen Steuereinheit des Antriebs integriert, so daß der Regelungsoffset (22a) über einen Digital/Analog-Wandler (23) der Regelungs-Vergleichseinrichtung (20) als Regelsignal (23a) zugeführt wird. Das von der Regelungs-Vergleichseinrichtung (20) generierte Regeldifferenzsignal (20a) wird wiederum über einen Analog/Digital-Wandler (21) als digitale Werte (21a) der Regeleinrichtung (22) zugeführt. Als Analog/Digital-Wandler (21) ist dabei ein Analog/Digital-Wandler mit geringer Auflösung ausreichend, da als wesentliche Regelinformation an die Regeleinrichtung (22) nur das Vorzeichen des Regeldifferenzsignals (20a) gelangen muß.

Innerhalb der digitalen Steuereinheit wird der Regelungsoffset (22a) einem Schwellenwertaddierer (24) zugeführt, der einen Schwellenwert (25a) dem Regelungsoffset (22a) aufaddiert. Der Schwellenwertaddierer (24) wird dabei in Form einer Rechenoperation realisiert sein. Ausgang des Schwellenwertaddierers (24) ist der eigentliche Sollwert (24a), bzw. eine entsprechende Abtastfolge von Sollwerten. Die Werte (24a) werden über einen Digital/Analog-Wandler (3) als Referenzsignal (3a) sodann der Überwachungs-Vergleichseinrichtung (4) zugeführt.

Nachdem die Regeleinrichtung im Initialisierungsbetrieb entsprechend ausgelegt und programmiert wurde, ist im Normalbetrieb zunächst davon auszugehen, daß der Regelungsoffset (22a) dem Meßsignal (2a) entspricht. Ändert sich nun das Meßsignal (2a), so stellt die Regelungs-Vergleichseinrichtung (20) eine Abweichung zum Regelungsoffset (22a) fest, woraufhin das Regelungsdifferenzsignal (20a) über den Digital/Analog-Wandler (21) an die Regeleinrichtung (22) gelangt. Mit einer gewissen Verzögerung wird sich sodann wieder bei dem Regelungsoffset der entsprechende Wert des Meßsignals (2a) einstellen. Die Regeleinrichtung ist dabei so ausgelegt, daß die Abweichung zwischen dem Meßsignal (2a) und dem Regelungsoffset (22a) im störungsfreien Normalbetrieb stets unterhalb eines vorgegebenen Schwellenwertes (25a) bleibt. Da der Regelungsoffset um diesen Schwellenwert (25a) durch den Schwellenwertaddierer (24) erhöht wird, wird also im störungsfreien Normalbetrieb das Meßsignal (2a) nie über dem Referenzsignal (3a) liegen. Tritt jedoch ein unvorhergesehener Verlauf mit einer schnellen Erhöhung der Antriebskraft (F) und damit auch des Meßsignal (2a) auf, so übersteigt die Abweichung zwischen dem Meßsignal (2a) und dem Regelungsoffset (22a) den Schwellenwert (25a). Ist dies der Fall, so ist das Meßsignal (2a) gleichzeitig auch größer als das Referenzsignal (3a), so daß von der Überwachungs-Vergleichseinrichtung (4) ein Fehlersignal (4a) generiert wird.

Ein Testbetrieb kann für die elektronische Schaltung gemäß Fig. 3 entsprechend eingerichtet werden, indem zu Beginn einer jeweiligen Antriebsbewegung der Schwellenwert (25a) entsprechend niedrig vorgegeben wird. In diesem Fall wird beim Anlauf des Antriebes die Überwachungs-Vergleichseinrichtung (4) ebenfalls kurz ansprechen, so daß in den Normalbetrieb übergegangen werden kann, für den der Schwellenwert (25a) wieder entsprechend erhöht wird.

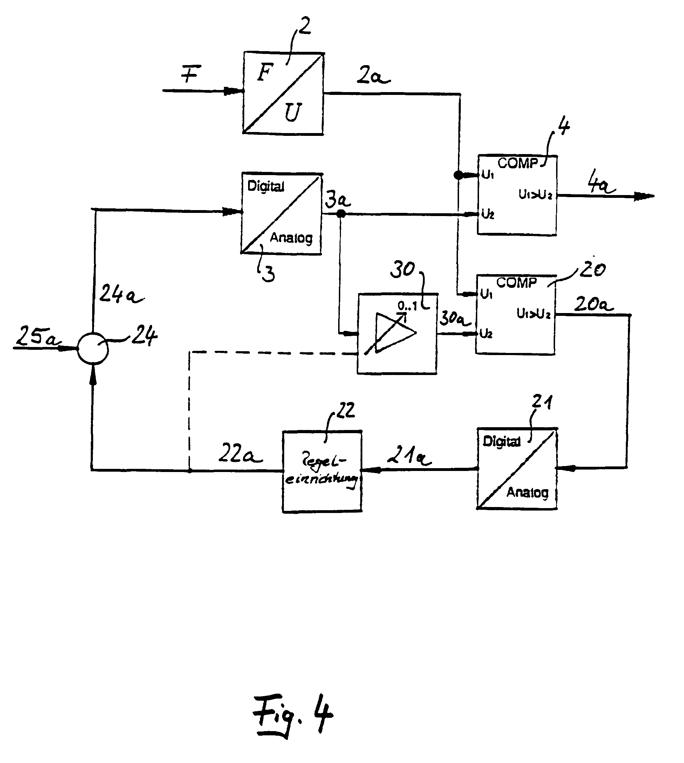

Fig. 4 zeigt ein zweites Ausführungsbeispiel der erfindungsgemäßen Schaltung nach Fig. 3. Hierbei ist der Digital/Analog-Wandler (23) eingespart worden, indem nicht der Regelungsoffset (22a), sondern direkt das Differenzsignal (3a) der Regelungs-Vergleichseinrichtung (20) zugeführt wird. Hierbei muß allerdings berücksichtigt werden, daß das Referenzsignal (3a) gegenüber dem Regelungsoffset (22a) um den Schwellenwert (25a) erhöht ist. Dementsprechend ist ein Verstärker bzw. ein Abschwächer (30) vorgesehen, dessen Verstärkungsfaktor durch den Wert des Regelungsoffsets (22a) gesteuert wird. Als Folge hiervon entspricht das Regelsignal (30a) näherungsweise dem Regelsignal (23a) aus Fig. 3, so daß der Funktionsablauf der Schaltung gemäß Fig. 4 ansonsten dem der Schaltung gemäß Fig. 3 gleicht.

## Patentansprüche

1. Elektronische Schaltung zur Überwachung der Antriebskraft eines Antriebs, vorzugsweise eines elektromotorischen Antriebs,
mit einem Kraftaufnehmer (2), dessen Ausgangssignal ein analoges Meßsignal (2a) der Antriebskraft (F) ist,
mit einer Regelungs-Vergleichseinrichtung (20), durch die aus dem Vergleich des zugeführten analogen Meßsignals (2a) und eines zugeführten Regelungsoffsets (22a) ein Regeldifferenzsignal (20a) generierbar ist,
mit einer Regeleinrichtung (22), mit der ausgehend von dem zugeführten Regeldifferenzsignal (20a) der Regelungsoffset (22a) generierbar ist, der dem Meßsignal der Antriebskraft fortlaufend träge nachgeführt wird, so daß bei normalen Betriebsbedingungen des Antriebs der Betrag der Regeldifferenz zwischen Meßsignal (2a) und Regelungsoffset (22a) kleiner als ein vorgegebener Schwellenwert (25a) ist,
mit einem digitalen Schwellenwertaddierer (24), an dessen Eingang der Regelungsoffset (22a) anliegt, wobei durch Addition eines vorgegebenen Schwellenwerts (25a) zu dem Regelungsoffset (22a) ein digitaler Sollwert (24a) ermittelbar ist,
mit einem Digital/Analog-Wandler (3), durch den ausgehend von dem zugeführten digitalen Sollwert (24a) ein analoges Referenzsignal (3a) generierbar ist,
und mit einer Überwachungs-Vergleichseinrichtung (4), durch die ausgehend von dem zugeführten analogen Referenzsignal (3a) und dem zugeführten Meßsignal (2a) ein Fehlersignal (4a) generierbar ist, sobald das Meßsignal (2a) von dem analogen Referenzsignal (3a) in vorgegebener Weise abweicht.

2. Elektronische Schaltung nach Anspruch 1, wobei die Regeleinrichtung (22) in einer digitalen Steuereinheit integriert ist, wobei das analoge Regeldifferenzsignal (20a) über einen Analog/Digital-Wandler (21) als digitaler Wert (21a) der Regeleinrichtung (22) zuführbar ist, und wobei ein von der Regeleinrichtung (22) momentan ermittelter Regelungsoffset (22a) der Regelungs-Vergleichseinrichtung (20) über einen Digital/Analog-Wandler (23) als analoges Regelsignal (23a) zuführbar ist.

3. Elektronische Schaltung nach Anspruch 2, wobei der Schwellenwertaddierer (24) in der digitalen Steuereinheit integriert und der Schwellenwert (25a) als digitaler Wert in einem digitalen Speicher abspeicherbar ist.

4. Elektronische Schaltung nach einem der Ansprüche 1 bis 3, wobei statt des analogen Regelsignals (23a) das analoge Referenzsignal (3a) als Eingang der Regelungs-Vergleichseinrichtung (20) über einen Verstärker (30) zuführbar ist und wobei der Verstärkungsfaktor des Verstärkers (30) von dem Wert des Regelungsoffsets (22a) abhängig ist.

5. Elektronische Schaltung nach einem der Ansprüche 1 bis 4, wobei von der Überwachungs-Vergleichseinrichtung (4) ein Fehlersignal (4a) generierbar ist, sobald das Meßsignal (2a) eine größere Spannung als das Referenzsignal (3a) aufweist.

6. Elektronische Schaltung nach einem der Ansprüche 1 bis 5, wobei der Antrieb ein Gleichstrommotor ist und wobei der Kraftaufnehmer (2) auf einer Messung des Antriebsstroms basiert.

7. Elektronische Schaltung nach einem der Ansprüche 1 bis 6, wobei die Überwachungs-Vergleichseinrichtung (4) ein aus einem Operationsverstärker bestehender Komparator ist.

8. Elektronische Schaltung nach einem der Ansprüche 1 bis 7, wobei der Digital/Analog-Wandler (3) aus einem Impulsbreitenmodulator besteht, dessen Taktverhältnis und dessen gemittelte Ausgangsspannung (3a) proportional zu dem zugeführten digitalen Sollwert (24a) sind.

9. Verfahren zur elektronischen Überwachung der Antriebskraft eines Antriebs mit einer Schaltung, mit den folgenden Schritten:
a) ein Regelungsoffset (22a) wird dem analogen Meßsignal (2a) der Antriebskraft mittels einer Regeleinrichtung (22) fortlaufend nachgeführt, wobei die Regeleinrichtung (22) derart ausgelegt ist, daß bei normalen Betriebsbedingungen des Antriebs der Betrag der Regeldifferenz (20a) zwischen Meßsignal (2a) und Regelungsoffset (22a) kleiner als ein vorgegebener Schwellenwert (25a) ist,
b) der digitale Sollwert (24a) wird berechnet, indem zu dem momentan ermittelten Regelungsoffset (22a) der vorgegebene Schwellenwert (25a) addiert wird,
c) aus dem digitalen Sollwert (24a) wird über einen Digital/Analog-Wandler (3) ein analoges Referenzsignal (3a) generiert,
d) das analoge Meßsignal (2a) der Antriebskraft und das analoge Referenzsignal (3a) werden der Überwachungs-Vergleichseinrichtung (4) zugeführt,
e) die Überwachungs-Vergleichseinrichtung (4) generiert ein Fehlersignal (4a), sobald das Meßsignal (2a) eine größere Spannung als das Referenzsignal (3a) aufweist.

10. Verwendung einer elektronischen Schaltung nach einem der Ansprüche 1 bis 8 und / oder eines Verfahrens nach Anspruch 9 für Verschließelemente, vorzugsweise für Tore, Türen, Rolläden oder Fenster.

## Claims

1. Electronic circuit for monitoring the driving force of a drive, preferably an electromotive drive,
with a force transducer (2), the output signal of which is an analogue measuring signal (2a) of the driving force (F),
with a control-comparison device (20), by which a system-deviation signal (20a) can be generated from the comparison of the supplied analogue measuring signal (2a) and a supplied control offset (22a),
with a control device (22), with which the control offset (22a) can be generated on the basis of the supplied system-deviation signal (20a) and continuously corrected to the measuring signal of the driving force with a time lag, so that under normal operating conditions of the drive the amount of the system deviation between the measuring signal (2a) and the control offset (22a) is less than a predetermined threshold value (25a),
with a digital threshold-value adder (24), at the input of which the control offset (22a) is present, a digital setpoint value (24a) being determinable by addition of a predetermined threshold value (25a) to the control offset (22a),
with a digital/analogue converter (3), by which an analogue reference signal (3a) can be generated on the basis of the supplied digital setpoint value (24a),
and with a monitoring-comparison device (4), by which an error signal (4a) can be generated on the basis of the supplied analogue reference signal (3a) and the supplied measuring signal (2a) as soon as the measuring signal (2a) deviates from the analogue reference signal (3a) in a predetermined way.

2. Electronic circuit according to Claim 1, the control device (22) being integrated in a digital control unit, the analogue system-deviation signal (20a) being able to be supplied to the control device (22) via an analogue/digital converter (21) as a digital value (21a), and a control offset (22a) determined momentarily by the control device (22) being able to be supplied to the control-comparison device (20) via a digital/analogue converter (23) as an analogue control signal (23a).

3. Electronic circuit according to Claim 2, the threshold-value adder (34) being integrated in the digital control unit and the threshold value (25a) being able to be stored as a digital value in a digital memory.

4. Electronic circuit according to one of Claims 1 to 3, the analogue reference signal (3a) being able to be supplied instead of the analogue control signal (23a) as an input to the control-comparison device (20) via an amplifier (30), and the gain factor of the amplifier (30) being dependent on the value of the control offset (22a).

5. Electronic circuit according to one of Claims 1 to 4, an error signal (4a) being able to be generated by the monitoring-comparison device (4) as soon as the measuring signal (2a) has a greater voltage than the reference signal (3a).

6. Electronic circuit according to one of Claims 1 to 5, the drive being a d.c. motor and the force transducer (2) being based on a measurement of the drive current.

7. Electronic circuit according to one of Claims 1 to 6, the monitoring-comparison device (4) being a comparator comprising an operational amplifier.

8. Electronic circuit according to one of Claims 1 to 7, the digital/analogue converter (3) comprising a pulse-width modulator, the pulse duty factor and averaged output voltage (3a) of which are proportional to the supplied digital setpoint value (24a).

9. Method of electronically monitoring the driving force of a drive with a circuit, having the following steps:
a) a control offset (22a) is continuously corrected to the analogue measuring signal (2a) of the drive force by means of a control device (22), the control device (22) being designed in such a way that under normal operating conditions of the drive the amount of the system deviation (20a) between the measuring signal (2a) and the control offset (22a) is less than a predetermined threshold value (25a),
b) the digital setpoint value (24a) is calculated by adding the predetermined threshold value (25a) to the momentarily determined control offset (22a),
c) an analogue reference signal (3a) is generated from the digital setpoint value (24a) via a digital/analogue converter (3),
d) the analogue measuring signal (2a) of the drive force and the analogue reference signal (3a) are supplied to the monitoring-comparison device (4),
e) the monitoring-comparison device (4) generates an error signal (4a) as soon as the measuring signal (2a) has a greater voltage than the reference signal (3a).

10. Use of an electronic circuit according to one of Claims 1 to 8 and/or of a method according to Claim 9 for closing elements, preferably for gates, doors, roller shutters or windows.

## Revendications

1. Montage électronique pour la surveillance de la force d'entraînement d'un entraînement, de préférence d'un entraînement électromoteur, avec un capteur de force (2) dont le signal de sortie est un signal de mesure analogique (2a) de la force d'entraînement (F), avec une installation de comparaison et de réglage (20) par laquelle, à partir de la comparaison du signal de mesure analogique transmis (2a) et d'un décalage de réglage transmis (22a), un signal de différence de réglage (20a) peut être généré, avec une installation de réglage (22) avec laquelle, en partant du signal de différence de réglage transmis (20a), le décalage de réglage (22a) peut être généré qui est amené à suivre continuellement avec une inertie le signal de mesure de la force d'entraînement de telle sorte que dans des conditions de fonctionnement normales de l'entraînement, la somme de la différence de réglage entre le signal de mesure (2a) et le décalage de réglage (22a) est plus petite qu'une valeur de seuil prédéterminée (25a), avec un additionneur de valeurs de seuil numérique (24) à l'entrée duquel s'applique le décalage de réglage (22a) où, par addition d'une valeur de seuil prédéterminée (25a) au décalage de réglage (22a), une valeur de consigne numérique (24a) peut être déterminée, avec un convertisseur numérique/analogique (3) par lequel, en partant de la valeur de consigne numérique transmise (24a), un signal de référence analogique (3a) peut être généré, et avec une installation de comparaison et de surveillance (4) par laquelle, en partant du signal de référence analogique transmis (3a) et du signal de mesure transmis (2a), un signal d'erreur (4a) peut être produit dès que le signal de mesure (2a) s'écarte du signal de référence analogique (3a) d'une manière prédéterminée.

2. Montage électronique selon la revendication 1, où l'installation de réglage (22) est intégrée dans une unité de commande numérique, où le signal de différence de réglage analogique (20a) peut être transmis par un convertisseur analogique/numérique (21) comme valeur numérique (21a) à l'installation de réglage (22), et où un décalage de réglage (22a) déterminé momentanément par l'installation de réglage (22) peut être amené à l'installation de comparaison et de réglage (20) par un convertisseur numérique/analogique (23) comme signal de réglage analogique (23a).

3. Montage électronique selon la revendication 2, où l'additionneur de valeurs de seuil (24) est intégré dans l'unité de commande numérique, et la valeur de seuil (25a) peut être stockée comme valeur numérique dans une mémoire numérique.

4. Montage électronique selon l'une des revendications 1 à 3, où à la place du signal de réglage analogique (23a), le signal de référence analogique (3a) peut être transmis comme entrée à l'installation de réglage et de comparaison (20) par un amplificateur (30) et où le facteur d'amplification de l'amplificateur (30) dépend de la valeur du décalage de réglage (22a).

5. Montage électronique selon l'une des revendications 1 à 4, où l'installation de surveillance et de comparaison (4) peut produire un signal d'erreur (4a) dès que le signal de mesure (2a) présente une plus grande tension que le signal de référence (3a).

6. Montage électronique selon l'une des revendications 1 à 5, où l'entraînement est un moteur à courant continu, et où le capteur de force (2) est basé sur une mesure du courant d'entraînement.

7. Montage électronique selon l'une des revendication 1 à 6, où l'installation de surveillance et de comparaison (4) est un comparateur constitué d'un amplificateur opérationnel.

8. Montage électronique selon l'une des revendications 1 à 7, où le convertisseur numérique/analogique (3) est constitué d'un modulateur de largeur d'impulsion dont le rapport de cadence et sa tension de sortie moyennée (3a) sont proportionnels à la valeur de consigne numérique transmise (24a).

9. Procédé de surveillance électronique de la force d'entraînement d'un entraînement avec un montage, comprenant les étapes suivantes :
a) un décalage de réglage (22a) est amené à poursuivre continuellement le signal de mesure analogique (2a) de la force d'entraînement au moyen d'une installation de réglage (22), où l'installation de réglage (22) est conçue de façon que lors de conditions de fonctionnement normales de l'entraînement, la somme de la différence de réglage (20a) entre le signal de mesure (2a) et le décalage de réglage (22a) est plus petite qu'une valeur de seuil prédéterminée (25a),
b) la valeur de consigne numérique (24a) est calculée en additionnant la valeur de seuil prédéterminée (25a) au décalage de réglage (22a) déterminé momentanément,
c) il est produit à partir de la valeur de consigne numérique (24a) par un convertisseur numérique/analogique (3) un signal de référence analogique (3a),
d) le signal de mesure analogique (2a) de la force d'entraînement et le signal de référence analogique (3a) sont transmis à l'installation de surveillance et de comparaison (4),
e) l'installation de surveillance et de comparaison (4) produit un signal d'erreur (4a) dès que le signal de mesure (2a) présente une plus grande tension que le signal de référence (3a).

10. Utilisation d'un montage électronique selon l'une des revendications 1 à 8 et/ou d'un procédé selon la revendication 9 pour des éléments de fermeture, de préférence pour des portails, des portes, des volets roulants ou des fenêtres.
